**Europäisches Patentamt**

(19) **European Patent Office**

**Office européen des brevets**

(11) Numéro de publication: **0 049 200**

**B1**

(12) **FASCICULE DE BREVET EUROPEEN**

(45) Date de publication du fascicule du brevet: **26.02.86**

(51) Int. Cl.⁴: **F 02 K 1/76,** F 02 K 1/15, F 02 C 7/32

(21) Numéro de dépôt: **81401487.4**

(22) Date de dépôt: **25.09.81**

(54) **Dispositif pour manoeuvrer les volets d'une tuyère de turbomachine.**

(30) Priorité: **01.10.80 FR 8021004**

(43) Date de publication de la demande: **07.04.82 Bulletin 82/14**

(45) Mention de la délivrance du brevet: **26.02.86 Bulletin 86/09**

(84) Etats contractants désignés: **DE FR GB**

(56) Documents cités:
FR-A-1 205 480
FR-A-2 404 113
GB-A-1 136 584
US-A-2 612 020
US-A-3 002 500
US-A-3 401 520
US-A-3 570 101
US-A-3 640 068

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Fondacci, Jean-Luc**
**10, rue Chateaubriand**
**F-91230 Montgeron (FR)**
Inventeur: **Francois, Yves-Marie M. R.**
**117A, avenue du Colonel Fabien**
**F-77190 Dammarie les Lys (FR)**

(74) Mandataire: **Moinat, François et al**
**S.N.E.C.M.A. Service des Brevets Boîte Postale 81**
**F-91003 Evry Cedex (FR)**

## Description

La présente invention concerne un dispositif pour manoeuvrer les volets d'une tuyère de turbomachine.

On cannait depuis longtemps déjà des tuyères de turbomachines dont la section peut être réglée en fonction du régime, grâce au déplacement de volets, constituant des éléments de paroi mobiles; les brevets français n° 1 215 236 et 1 215.237 de la déposante décrivent par exemple des tuyères équipées de volets pivotants qui permettent de régler leur section et en outre de modifier leur profil pour le faire passer d'une forme convergente convenant aux écoulements subsoniques, à une forme convergente-divergente, convenant aux écoulements supersoniques, et inversement.

On cannait également des inverseurs de poussée pour tuyères de turbomachines, qui comportent également des volets mobiles.

On connait déjà de nombreux types différents de dispositifs permettant de manoeuvrer les volets d'une tuyère de turbomachine. Certains de ces dispositifs connus comportent, pour manoeuvrer les volets mobiles, des vérins hydrauliques, qui sont alimentés, avec du carburant ou avec un liquide hydraulique usuel, par une pompe, choisie de façon à satisfaire aux conditions de fonctionnement du dispositif: les gaz chauds sortant de la tuyère appliquant à chaque volet à manoeuvrer une pression qui tend à le faire pivoter en l'écartant davantage de l'axe de la tuyère; cette pression exercée sur chaque volet est relativement faible lorsqu'il se trouve dans sa position correspondant à l'ouverture maximale de la tuyère, et beaucoup plus forte lorsque chaque volet est dans sa position correspondant à l'ouverture minimale de la tuyère (ou à sa fermeture complète dans le cas des volets d'un inverseur de poussée). La pression de refoulement de la pompe doit donc être beaucoup plus élevée dans le second cas que dans le premier. D'autre part, la pompe doit pouvoir fournir un débit important pendant les courts régimes transitoires de la turbomachine, pendant lesquels les volets de sa tuyère doivent être ramenés de l'une à l'autre de leurs positions correspondant respectivement à l'ouverture maximale et à l'ouverture minimale de ladite tuyère. Par contre, en régime permanent de la turbomachine, la pompe n'a à fournir qu'un faible débit, correspondant notamment aux fuites des vérins hydrauliques.

Pour tenter de satisfaire à ces différentes conditions de fonctionnement, on a déjà utilisé des pompes de différents types, entraînées chacune mécaniquement à partir de l'arbre de la turbomachine, directement ou par l'intermédiaire d'une transmission appropriée. C'est ainsi que l'on a déjà utilisé des pompes volumétriques auto-régulatrices à cylindrée constante, associées à des clapets modulateurs destinés à recycler la fraction du débit de la pompe qui est en excès. Tous ces systèmes ont en commun l'inconvénient que la vitesse da la pompe et le débit restent élevés, même en régime permanent, provoquant usure et échauffement. De plus, les clapets modulateurs donnent au système un temps de réponse trop long en régimes transitoires.

On a également tenté d'utiliser une pompe volumétrique, à cylindrée constante, associée à une soupape à jet; la stabilité d'un tel dispositif n'est cependent pas encore certaine. On a également imaginé d'associer deux pompes volumétriques, dont l'une envoie en permanence un faible débit de liquide hydraulique ou de carburant dans le vérin, pour compenser les fuites en régime permanent, tandis que le débit refoulé par l'autre pompe volumétrique est recyclé, sauf lors des régimes transitoires, où il est également envoyé dans le vérin. Un tel dispositif est évidemment lourd et coûteux. On a également utilisé des pompes à débit variable pouvant de surcroît inverser le sens d'écoulement du débit. De tels systèmes sont cependent relativement complexes et différents accessoires doivent leur être associés, tels que des limiteurs de pression. Enfin, on a imaginé d'associer à une pompe volumétrique à débit relativement faible, mais suffisant pour le régime permanent un accumulateur hyraulique, qui n'était mis à contribution que lors des régimes transitoires; bien entendu, cette solution suppose que les intervalles entre les régimes transitoires successifs, c'est à dire entre les manoeuvres successives du volet mobile, sont suffisants pour permettre à chaque fois la recharge del'accumulateur.

US—A—3 401 520 décrit un dispositif de commande pneumatique dans lequel des vérins pneumatiques sont déplacés, dans un sens, directement grâce à une alimentation en air comprimé dérivée d'un turboréacteur et, dans l'autre sens, à partir d'une alimentation sous pression beaucoup plus élevée au moyen d'un groupe motocompresseur alimenté à la même source que précédemment. Ce groupe n'intervient ainsi que de façon temporaire. Ce type de solution entièrement pneumatique ne peut convenir à certaines applications visées par l'invention pour lesquelles les manoeuvres de la tuyère deviennent difficiles aux très bas régimes par suite des frottements et des faibles niveaux de pression disponibles. Ce type de solution conduit également à des difficultés de stabilisation et nécessite un encombrement plus important des vérins.

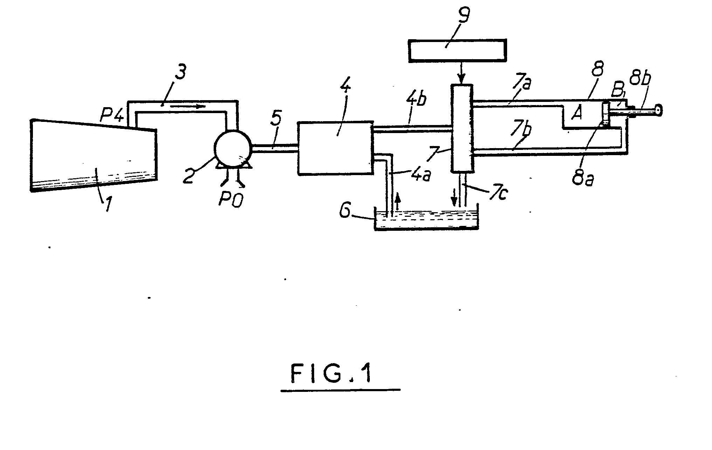

GB—A—1 136 584 décrit un dispositif de commande d'accessoires dans lequel selon la figure 3, une turbine alimentée en air par prélèvement dans le compresseur haute pression entraîne une pompe hydraulique. Ce type de solution à turbine ne permet aucune économie de la consommation d'air.

La présente invention a pour objet principal de réaliser un dispositif pour manoeuvrer les volets d'une tuyère de turbomachine au moyen de vérins hydrauliques, alimentés par une pompe volumétrique à cylindrée constante, par l'intermédiaire d'un distributeur qui règle les pressions et les débits transmis auxdits vérins, en évitant les inconvénients, précédemment indiqués, des dispositifs de ce genre qui ont été réalisés jusqu'à présent.

Le dispositif selon la présente invention est caractérisé en ce que la pompe hydraulique à cylindrée constante est entraînée en permanence à une vitesse variable par un moteur d'air comprimé à cylindrée constante, alimenté luimême avec de l'air sous haute pression variable prélevé dans le compresseur de ladite turbomachine.

Le dispositif selon la présente invention offre l'avantage d'une excellente adaptation des performances des vérins hydrauliques aux conditions de fonctionnement de la turbomachine. En effet, d'une part, la pression de refoulement de la pompe hyraulique à cylindrée constante est pratiquement proportionnelle à la pression—relative—de l'air prélevé dans le compresseur de la turbomachine, par exemple à la sortie de son dernier étage; ceci est particulièrement avantageux puisque, ainsi, l'effort maximal disponible que chaque vérin applique au volet mobile est constamment proportionnel à la pression à la sortie du compresseur de la turbomachine, alors que la résistance qui s'oppose à la manoeuvre de chaque volet est due essentiellement à la pression des gaz éjectés par la tuyère, qui est elle-même une fonction croissante de la pression à la sortie du compresseur; on obtient ainsi une adaptation automatique de la pression c'est-à-dire des forces disponibles pour la manoeuvre des volets de la tuyère, aux résistances qui s'opposent à la manoeuvre desdits volets. D'autre part, lorsque la turbomachine fonctionne en régime permanent, la diminution de la demande de débit vers les vérins, provoqué par la fermeture du distributeur se traduit par une diminution de la vitesse de rotation de la pompe et du moteur pneumatique; ladite pompe envoie donc dans le distributeur de commande un débit de liquide hydraulique ou de carburant, qui est relativement faible, mais cependant suffisant pour compenser les fuites éventuelles et alimenter éventuellement un circuit de refroidissement de ladite pompe, alors que, dans les dispositifs antérieurs, qui ont été mentionnés, la pompe ne cesse pas de tourner à grande vitesse, même en régime permanent, ce qui donne lieu à des échauffements intempestifs. Ainsi, l'utilisation, selon la présente invention, d'une pompe à cylindrée constante, qui est entraînée à une vitesse variable en fonction de la demande en débit vers les vérins, procure sensiblement les mêmes avantages qu'une pompe à débit variable mais à vitesse de rotation constante autorégulatrice, mais en outre l'avantage supplémentaire que, dans le cas due dispositif selon la présente invention, la pompe à cylindrée constante tourne la plupart du temps, c'est-à-dire pendant les régimes permanents, à une vitesse faible, ce qui ralentit considérablement son usure. Par ailleurs, l'accroissement de poids dû au moteur pneumatique que comporte le dispositif selon la présente invention, est compensé, au moins partiellement, par la suppression de la prise de mouvement sur l'arbre de la turbomachine, pour l'entraînement mécanique de la pompe.

A titre d'exemple, on a décrit ci-dessous et illustré schématiquement sur le figure unique du dessin annexé, une forme de réalisation de l'invention.

Sur la figure, on a représenté seulement, de façon schématique, le compresseur 1 d'une turbomachine, notamment d'un turboréacteur. 2 désigne un moteur pneumatique rotatif, qu'une conduite 3 alimente avec de l'air sous haute pression, prélevé par exemple à la sortie du dernier étage du compresseur 1, sous une pression $P_4$, variable suivant le régime de fonctionnement du turboréacteur. L'air détendu dans le moteur à air comprimé 2 s'échappe dans l'atmosphère à la pression $P_o$. 4 désigne une pompe volumétrique rotative, à cylindrée constante, dont le rotor est accouplé en permanence à celui du moteur pneumatique 2, par des moyens connus, qui ont été figurés sous la forme d'un arbre 5. La conduite d'aspiration 4a de la pompe 4 plonge dans du liquide hydraulique, contenu dans une capacité 6, tandis que sa conduite de refoulement 4b aboutit à l'entrée d'un distributeur 7, dont les deux sorties sont elles-mêmes raccordées, par des conduites 7a et 7b, aux deux chambres, A et B, d'un vérin hydrualique 8; la tige 8b du piston 8a du vérin hydraulique 8 est accouplée, par des moyens qui n'ont pas été représentés, à un ou plusieurs des volets mobiles dont la tuyère de la turbomachine considérée est équipée, de façon connue en soi. Le distributeur 7, dont il existe de nombreuses réalisations connues, qu'il n'est pas nécessaire de décrire en détail, est conçu de façon à raccorder son entrée, c'est-à-dire sa tubulure raccordée à la conduite 4b, soit à la conduite 7a, soit à la conduite 7b, en fonction de signaux, de nature physique quelconque, par exemple pneumatiques, hydrauliques, électriques ... etc., en provenance d'un dispositif de calcul et de commande 9. En même temps qu'il dirige le débit de liquide hydraulique envoyé par la pompe 4, vers la chambre A ou vers la chambre B du vérin 8, le distributeur 7 fait communiquer son autre chambre, B ou A, avec une conduite de retour 7c, débouchant au-dessus ou dans la capacité 6. Au lieu de contenir un liquide hydraulique spécial, la capacité 6 peut être insérée dans le circuit du carburant qui alimente le turboréacteur. Le dispositif de calcul et de commande 9 comporte des moyens connus pour élaborer les signaux de commande du distributeur 7 à partir des informations relatives aux conditions instantanées de fonctionnement de la turbomachine, que des capteurs appropriés transmettant à ses entrées. Ce dispositif de calcul et de commande peut d'ailleurs être intégré au calculateur général de commande du fonctionnement de la turbomachine.

Si l'on désigne par $a_m$ la cylindrée du moteur pneumatique 2, et par $a_p$ celle de la pompe volumétrique 4, et dans l'hypothèse où le rendement global de ce groupe rotatif est peu inférieur à l'unité, on voit facilement que la pression relative de refoulement de ladite pompe 4 est donnée par la formule

$$\Delta P = \frac{\alpha m}{\alpha p}(P4 - Po)$$

c'est-à-dire que la pression maximale applicable au piston 8a du vérin hydraulique 8 est sensiblement proportionnelle à la pression relative de l'air qui alimente le moteur pneumatique 2. Il en résulte, comme on l'a déjà indiqué, une adaptation automatique entre la force de manoeuvre appliquée au volet mobile par la tige 8b du vérin 8, d'une part, et la résistance au déplacement dudit volet, qui résulte essentiellement de la pression exercée sur lui par les gaz chauds traversant la tuyère.

Bien entendu, le moteur pneumatique 2 pourrait être alimenté avec de l'air prélevé, sous une pression moins élevée, dans l'une des étages antérieurs du compresseur 1 du turboréacteur.

Le dispositif selon la présente invention peut être utilisé pour manoeuvrer tous les types de volets de tuyère d'une turbomachine.

Bien entendu, le vérin unique 8 peut manoeuvrer simultanément plusieurs volets mobiles de la tuyère, ces volets étant accouplés entre eux mécaniquement, de façon connue en soi.

Plusieurs vérins, destinés chacun à manoeuvrer un seul volet, peuvent aussi être alimentés en parallèle par les conduites de sortie 7a et 7b du distributeur 7.

## Revendication

Dispositif pour manoeuvrer les volets d'une tuyère de turbomachine au moyen de vérins hydrauliques (8), alimentés par une pompe volumétrique à cylindrée constante (4), par l'intermédiaire d'un distributeur (7) qui règle les pressions et les débits transmis auxdits vérins (8) caractérisée en ce que la pompe hydraulique à cylindrée constante (4) est entraînée en permanence à une vitesse variable par un moteur à air comprimé à cylindrée constante (2), alimenté lui-même avec de l'air sous haute pression variable prélevé dans le compresseur (1) de la turbomachine.

## Patentanspruch

Antriebsvorrichtung für die Klappen der Düse eines Gasturbinentreibwerks mit Hilfe von Hydraulikzylindern (8), die über einen Verteiler (7) zur Regelung der Drücke und der zu den Zylindern gelangenden Druchsätze von einer volumetrischen Pumpe (4) mit konstantem Hubvolumen gespeist werden, dadurch gekennzeichnet, daß die hydraulische Pumpe (4) permanent von einem Druckluftmotor (2) mit konstantem Hubvolumen mit variabler Geschwindigkeit angetrieben wird und daß der Druckluftmotor (2) seinerseits von unter variablem hohen Druck stehender Luft gespiest wird, die in dem Verdichter (1) des Gasturbienentriebswerks abgenommen wird.

## Claim

Flap actuating apparatus for the jet nozzle of a turbo-machine by means of hydraulic actuators (8), supplied by a volumetric pump of constant cubic capacity (4) through a distributor (7) which regulates the pressures and the flows transmitted to said actuators (8), characterised in that the hydraulic pump with constant cubic capacity (4) is driven continuously at a variable speed by a compressed air motor of constant cubic capacity (2), itself supplied with air under variable high pressure bled from the compressor (1) of the turbo-machine.

## FIG.1